# EUROPEAN PATENT APPLICATION

(11) **EP 1 009 119 A2**
(43) Date of publication of application: **14.06.2000**
(21) Application number: 99204205.1
(22) Date of filing: 08.12.1999
(51) Int. Cl.: H04J 14/02

(54) **Integration of Optical Add Drop Multiplexing filters**

(30) Priority: 10.12.1998 US 209255
(71) Applicant: Nortel Networks Corporation, Montreal, Quebec H2Y 3Y4 (CA)
(72) Inventor: Solheim, Alan Glen, Kanata, Ontario K2M 1C4 (CA)
(74) Representative: Maury, Richard Philip

(57) **Abstract**

An OADM filter is integrated into the optics package of optical receivers and transmitters of a wavelength division multiplexing (WDM) network. As the transmitter and the receiver already use collimated optics, eliminating several lenses and fiber attachments with their associate alignment, as well as the physical enclosure, importantly reduces the price of the transceiver-ADM filter combination in comparison with the cost for a separate transceiver and ADM filter. Furthermore, the arrangement allows for a more flexible network growth.

## Description

### BACKGROUND OF THE INVENTION

### Field of the Invention

This invention is directed to improvements in optical communication networks and in particular to integration of ADM filters into the transponder or transceiver optic.

### Background Art

Improvements in optical transmission methods have vastly enhanced the use of the optical communication systems by increasing the distance over which optical signals are transmitted, the number of customers served by a network and the quality of service. The use of dense wavelength division multiplexing (DWDM) techniques increased the transmission capacity of the existing fiber links, thus taking full advantage of the low-loss window available in optical fiber.

Some terms relevant to this invention are defined next.

Transponders are generally used for on-ramp and off-ramp to optical networks and for wavelength conversion within optical networks. A service platform in this specification refers to a client of the DWDM network, which could be a network (optical or non-optical) or an end user.

A wavelength conversion is performed at the border between optical networks operating in difference frequency bands. Long reach networks are characterized by high bit rate and high channel density carried over working and protection spans of fiber in the 1.5µm window according to the ITU grid suitable for dense WDM. Short reach networks are characterized by lower bit rate and lower WDM channel density in the 1.3 µm window.

In order to drop a signal travelling on the DWDM network to the service platform, a transponder converts the optical signal received from the DWDM optical network into an electrical signal, processes it, and launches the processed signal in optical format towards the service platform. In order to add a signal from the service platform to the DWDM network, the transponder converts the optical signal received from the service platform to an electrical format, processes the signal as needed, and re-converts it into an optical signal which is launched over a certain channel of the DWDM network.

A transponder comprises a first optical receiver-transmitter pair connected over the DWDM network, and a second optical receiver-transmitter pair, connected to the service platform. Each transponder operates at a certain wavelength, so that the number of transponders at a certain network node depends on the number of the channels that require processing at the respective node. In this specification, the first receiver and transmitter are referred to as the "long-reach receiver (LR Rx)" and the "long reach transmitter (LR Tx)" respectively. Similarly, the second receiver and transmitter are referred to as the "short reach receiver (SR Rx)" and the "short reach transmitter (SR Tx)" respectively.

The term transceiver is generally used to define a transmitter-receiver pair. Transceivers may be used for example as a network terminal.

Optical receivers and optical transmitters comprise a package with optical elements (optics), and an active device. A receiver also comprises an electronic unit for performing various operations on the client signal (e.g. reshaping, retiming). In the case of optical receivers, the active device is an opto-electrical converter, also called detector. The detector could be an avalanche photo detector (APD) or a positive-intrinsic negative (PIN) diode, which detects the light and converts it into an electrical signal. The active device in the case of a transmitter is a light source, which converts an electronic signal to an optical signal. The light source is generally a laser for generating the channel carrier.

The optics includes, besides the active device, passive elements necessary to couple the light from/to the fiber. Such passive elements comprise collimating and focusing lens, and/or optical isolators arranged between the fiber and the active device. The focussing and collimating lens could be Selfoc™ lens or graded index (GRIN) lens.

In addition, optical connectors are used to connect the optics to the respective fiber span of the WDM network. The connector includes a piece of fiber inserted with one end into the optics package, and provided with means for mechanical attachment and alignment with the fiber span at the other end. The point of insertion of this piece of fiber into the optics package must be in perfect alignment with the optical elements.

An optical multiplexer (Mux) is a network element that multiplexes a plurality of optical client signals, each carried by a wavelength (channel), into a multichannel optical signal. An optical demultiplexer (Demux) effects the reverse operation, namely it separates the individual channels form the multichannel signal, according to their wavelength. A Mux/Demux comprises a combination of optical filters coupled to each other, each for selectively reflecting or transmitting a certain wavelength. The optical elements are packaged separately from the transmitter or receiver optics, or from any optics that may be present at the network node.

In the case of WDM and DWDM systems, the optics package comprises a single chip with an array of active elements, each corresponding to a channel. The geometry of this array is matched to that of a corresponding input and output optical fiber and the coupling is done using clusters of collimating or focusing elements. Generally, a graded index (GRIN) lens with a tubular shape is used for focusing or collimating the light on/from the active element. The GRIN lens is positioned with the axis in a certain relationship with the geometrical center of the respective array, so that each active device is coupled to the respective associated channel on the fiber.

An optical add/drop multiplexer (OADM) directs one or more individual channels of the optical multichannel signal to local users (drop channels), while the remaining channels are passed directly from the input to the output (passthrough or express channels). Add channels may be inserted at an OADM site.

An OADM may include a 1xN demultiplexer filter, followed by a Nx1 multiplexer filter. The first filter element demultiplexes the frequency components (the channels) of the input WDM signal into N waveguide ports. A channel of interest is dropped to a local receiver, by optically connecting the corresponding port to the receiver. The second filter element multiplexes the remaining N-1 channels with a new channel into the fiber output. The new channel may nominally have the same frequency as that of the dropped channel and is added to the filter output by the unused port of the multiplexer. The frequency reuse capability of this type of ADM filters is an essential feature for maximizing the performance of a WDM optical ring network.

Typically, the cost of the ADM filter itself is a small percentage of the cost of the optical filter package, due to the precision necessary for alignment of optical elements.

When configured as a Mux/Demux, the filter has higher density and lower cost per port. However, the user must deploy all the filter capacity at installation, increasing the initial costs. In addition, if a wavelength is required to pass through the node, the demultiplexer and the multiplexer filters must be connected to one another, resulting in high through loss and degraded optical performance. When configured as individual channel ADM's, the flexibility is improved, however the cost per port increases and the density is degraded.

There is a need for eliminating most of the high filter packaging costs for ADM filters, while providing more flexibility of channel assignment at a transmission node.

According to one aspect of the invention there is provided an ADM optics package for an optical receiver of a wavelength division multiplexing (WDM) network comprising a receiver optics housing with a first input optical connector for transferring an input multichannel optical signal into the housing, a first lens for collimating the input multichannel optical signal into a collimated multichanel optical signal, a first ADM filter for receiving the collimated multichannel optical signal and separating same into a drop signal and a passthrough signal, a light detector for receiving the drop signal and converting same to an electrical signal and means for guiding the passthrough signal to the outside of the receiver optics housing.

In a further aspect of the invention there is provided an ADM optics package for an optical transmitter of a wavelength division multiplexing (WDM) network comprising, a transmitter optics housing with a second output optical connector for transferring an output multichannel optical signal to the WDM network, a light source for providing an add signal, a second ADM filter element for combining the add signal with a passthrough signal and providing the output multichannel optical signal, a third lens for focusing the output multichannel optical signal into the second output optical connector; and means for guiding the passthrough signal to the inside of the transmitter optics housing.

There is provided further a unidirectional ADM transceiver for an optical WDM network comprising, an ADM optical receiver for separating an input multichannel optical signal received from the WDM network into a drop signal and a passthrough signal, according to the wavelength, and an ADM optical transmitter for combining the passthrough signal and an add signal into an output multichannel optical signal according to the wavelength, and launching same into the WDM network.

Further, the invention provides an ADM node as defined in Claims 14 and 17; a bidirectional ADM transceiver as defined in Claim 15; a bidirectional ADM transponder as defined in Claim 16; and a multiplexing node as defined in Claim 18.

An advantage of the invention resides in lower costs to the customers, due mainly to reduced packaging costs.

As the transmitter and the receiver already use collimated optics, eliminating several lenses and fiber attachments with their associate alignment, as well as the physical enclosure, will importantly reduce the price of the transceiver-ADM filter combination in comparison with the cost for a separate transponder and ADM filter.

Another advantage is that the invention improves the optical performance by reducing the number of connectors and the amount of fiber connections between the ADM filters and the transponders. Reducing the number of connectors and connections results in eliminating the optical loss associated with these components, and also in improved reliability due to fewer components.

In turn, improved optical performance results in lowering network costs, by deferring or eliminating the need for optical amplifiers or regenerators, or increasing the node-to-node spacing.

The invention also allows the filter costs to be incurred only as a channel is deployed. This reduces the initial cost and eliminates stranded filter capacity due to uneven traffic growth, thereby further reducing the costs at the node.

It is an advantage of the present invention that it allows for integration of the optical filters in a transponder/transceiver optics package.

Another advantage is in providing configurations for the optics at optical receivers and transmitters that result in a flexible architecture for a network node, in that transmission channels may be added and/or dropped at a node when needed, rather than when the equipment is deployed.

The foregoing and other objects, features and advantages of the invention will be apparent from the following more particular description of the preferred embodiments, as illustrated in the appended drawings, where:
**Figures 1a-1d (Prior Art)** show current configurations for optics packages. Figure 1(a) shows an optical add-drop multiplexer (OADM) network node, Figure 1b illustrates receiver optics, Figure 1c shows transmitter optics, and Figure 1d shows OADM optics;
**Figure 2** shows a configuration of a transponder node with discrete OADM's;
**Figure 3A** shows integration of an OADM filter into the receiver optics package;
**Figure 3B** shows integration of an OADM filter into the transmitter optics package;
**Figure 4** illustrates a configuration of a traffic node using unidirectional transponders with integrated ADM filters;
**Figure 5** illustrates a configuration of a traffic node using bidirectional transponders with integrated ADM filters;
**Figure 6** is a multiplexer/demultiplexer configuration using bidirectional transponders with integrated ADM filters;
**Figure 7** shows a band demultiplexer;
**Figure 8A** is a multiplexer/demultiplexer with bidirectional transponders and band Mux/Demuxes; and
**Figure 8B** is a multiplexer/demultiplexer with bidirectional transponders and band OADM's.

### DESCRIPTION OF THE PREFERRED EMBODIMENT

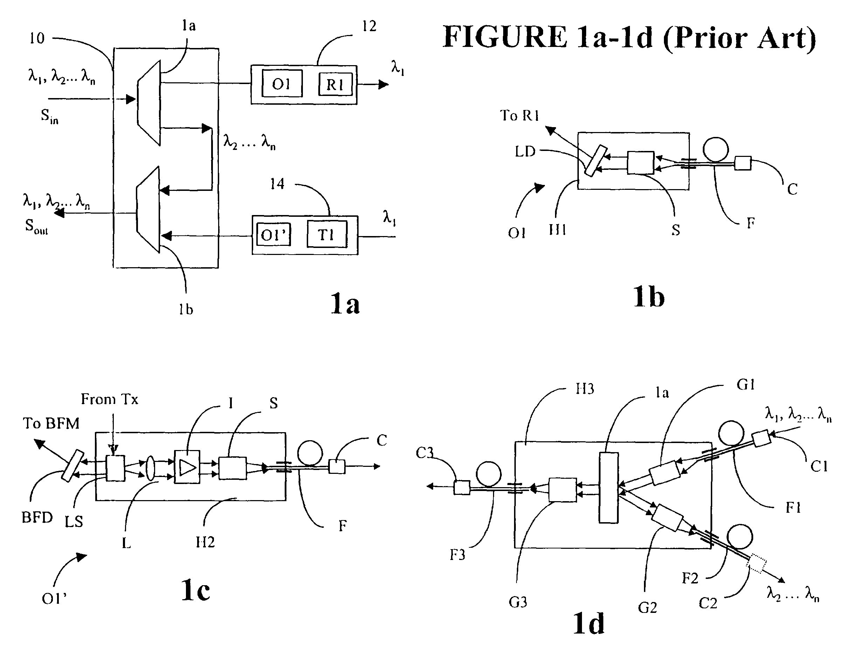

Figure 1a shows a network node with a discrete optical add/drop multiplexer (OADM) **10** for add/dropping a channel λ₁, i.e. receiver optics **O1**, transmitter optics **O1'**, and ADM filters **1a** and **1b** are shown as independent units. The node is provided with a receiver **12** for detecting a client signal on a drop channel λ₁, and a transmitter **14** for inserting a client signal on an add channel λ₁. In this example, a multichannel signal Sᵢₙ, comprising channels λ₁ to λₙ, is input to an ADM filter **1a**. Channel λ₁ is dropped to the input port of receiver **12**. Channels λ₂ to λₙ pass from filter **1a** to filter **1b** in the optical format.

To add a channel at the OADM node shown in Figure 1a, a transmitter **14** modulates channel carrier λ₁ with a client signal and provides the channel λ₁ to the input port of ADM filter **1b**. The add channel is multipexed with the passthrough channels λ₂ to λₙ to obtain multichannel output signal Sₒᵤₜ. The signal added at the ADM node could be a signal received from the local network or client, and could be carried on the same channel as that of the dropped channel, or on another channel.

Figure 1b shows the receiver optics **O1** comprising an optical connector **C**, a Selfoc lens **S** for collimating the light from the fiber **F** on the detector **LD**, and the optics housing **H1**. The light incident on light detector **LD** is transformed into an electrical signal, which is sent to the logic **R1** of receiver **12**.

Figure 1c shows the transmitter optics **O1'** comprising a housing **H2** a light source **LS**, an aspherical lens **L**, an optical isolator **I**, and a Selfoc lens **S** and an optical connector **C**. An electrical signal from transmitter logic Tx of transmitter **14**, modulates the optical channel generated by source **LS**. The light source **LS** is generally a laser. The spherical lens **L** collimates the light from source **LS**, and optical isolator **I** protects source **LS** from eventual reflections, as the lasers are very sensitive to incident light. The Selfoc lens **S** focuses the light into the fiber **F**. Figure 1b also shows a light detector **BFD** placed at the back of the laser, which detects the light emitted by the laser in its direction, and sends the detected signal to the backface monitor for controlling the laser.

Figure 1d shows the optics package for an ADM filter which receives input multichannel signal λ₁, λ₂, λ₃...λₙ fiber **F1**, drops channel λ₁ on fiber **F3** and passes through channels λ₂, λ₃...λₙ on fiber **F2**. The input multichannel signal is collimated by Selfoc lens **G1** on filter **1a**. The passthrough and drop channels are again collimated using Selfoc lenses **G2** and **G3**, respectively, to exit housing **H3** at the respective connectors **C2** and **C3**.

Connector **C2** is shown in dotted lines, in that it is provided when the ADM filter is provided for dropping a single wavelength. To add/drop more channels at the same traffic node as shown in Figure 1a, the node must be provided with additional filters, tuned on the frequency of the respective channel. Each channel added and dropped requires an additional pair of Mux/Demux filter elements. These can be packaged together or separately.

An optical multiplexer/ demultiplexer (Mux/demux) package is realized in a similar way. A multiplexer combines the signals output by all transmitters into a multi-channel output signal. To this end, the output port of each optical transmitter at the respective traffic node is connected to an input port of the multiplexer, and the output of the multiplexer is connected to the output fiber. A demultiplexer separates a multi-channel input signal into component channels and applies each channel to a respective receiver. To this end, the input of the demultiplexer is connected to the input fiber, and each output port of the demultiplexer is connected to the input port of a respective optical receiver at the respective traffic node.

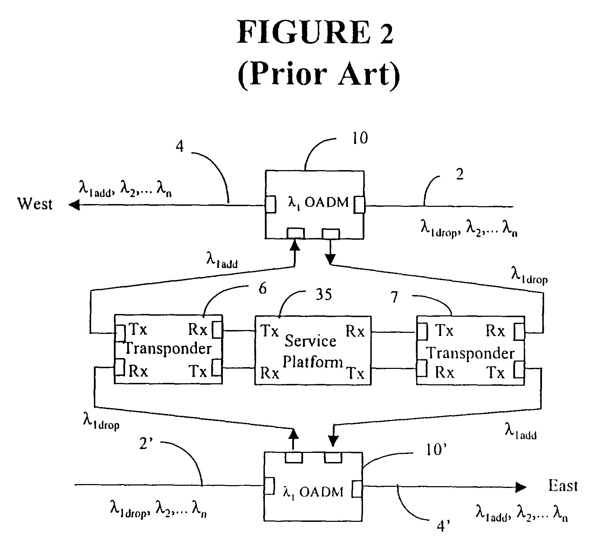

Figure 2 shows how OADMs are currently connected to the West and East transponders of a node. The configuration comprises an OADM **10** connected over fibers **2, 4** carrying a multichannel signal in the West direction, and an OADM **10'** connected over fibers **2'**, **4'** carrying a multichannel signal in the East direction. It is to be understood that East and West are relative terms used for better defining the invention.

Figure 2 also shows the connectors and the fiber connections between transponders **6**, **7**, OADM's **10**, **10'** and the service platform **35**. The client signal(s) added and dropped between the transponders and the service platform is/are in optical format, and the channel frequency on this link may be in a different band than the frequency of the dropped channel. The optics associated with each receiver and transmitter is contained in the respective transponder package. The connectors are illustrated as dark boxes.

The transponders shown in Figure 2 operate with respect to the East-bound traffic as follows. OADM **10** receives a multichannel signal λ_{1drop}, λ₂, λ₃...λₙ on fiber **2**, and drops wavelength λ_{1drop} to East transponder **7**. Transponder **7** processes the client signal in the electronic format, re-converts it in optical format, and presents it to the service platform **35** on a channel recognized by the East receiver of the service platform.

For West-bound traffic, West transponder **6** receives a local client signal from the service platform **35**, converts it into an electrical format, processes it as needed and modulates it over an optical channel λ_{1add}. The signal is transmitted by the West transmitter of transponder **6** to OADM **10**, which adds this channel to channels λ₂, λ₃...λₙ to launch a multichannel signal λ_{1add}, λ₂, λ₂...λₙ, on fiber **4**.

OADM **10'** operates in a similar way to add/drop channels to/from the East - bound traffic on fibers **2'** and **4'**.

It is to be noted that the configuration of Figure 2 utilizes four connectors for each OADM **12** and **12'** and transponder **6** and **7**, resulting in a total of 16 connectors.

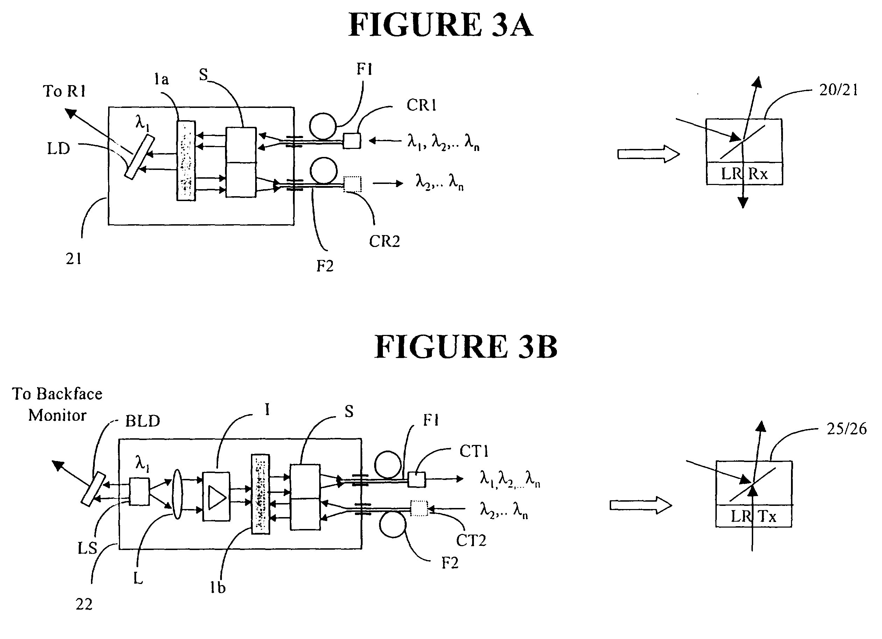

The present invention is directed to configurations where the optical filters of the Mux/Demuxes or OADM's are integrated with the receiver and transmitter optics, as shown in Figures 3A and 3B.

Figure 3A shows an ADM filter **1** for dropping a channel λ₁, the filter being integrated in the same package with the optics of a receiver. The housing of the package is denoted with **21**. An input optical connector **CR1** is provided for coupling the light from the input fiber into housing **21**, and an output optical connector **CR2** is provided for the passthrough channels.

The ADM filter **1a** is placed between the Selfoc lens **S** and the detector **LD**. The ADM filter **1a** may be even deposited on the detector surface. The filter operates as in the embodiment shown in Figure **1d**.

It is to be noted that integration of the ADM filter into the receiver optics package reduces the optical component count with a lens **G3**, and a housing **H3**, and also reduces the time for the alignment operation to optical elements in housing **21** only.

Figure 3A also shows the symbol for a receiver with an integrated ADM filter, denoted with **20** or **21** and is designated in the following as an ADM receiver.

Figure 3B illustrates an ADM filter **1b** for adding a channel λ₁, the filter being integrated in the same package with the optics of a transmitter. The housing of the package is denoted with **22**. An output optical connector **CT1** is provided for coupling the channels λ₁, λ₂...λₙ, from the housing **22** into output fiber **F1**, and input optical connector **CT2** couples input channels λ₂, λ₂...λₙ from fiber **F2** into housing **22**.

The ADM filter element **1b** is placed between the Selfoc lens **S** and the isolator **I**. The ADM filter **1b** receives add channel λ₁ from the light source **LS** and adds this channels to channels λ₂...λₙ.

It is to be noted that integration of the ADM filter into the receiver optics package, reduces the optical component count with a lens **G3**, and a housing **H3**, and also reduces the time for the alignment operation to optical elements in housing **22** only.

The symbol for a transmitter with an integrated ADM filter, denoted with **25**, is also illustrated on Figure 3B, and is designated in the following as an ADM transmitter.

It is to be noted that connectors **CR2** and **CT2** are illustrated in dotted lines, to show that they are used in bidirectional transponder configurations, as it will be described later. Lens **S** in both Figures 3A and 3B are each comprised of a collimating lens and a focusing lens, as shown.

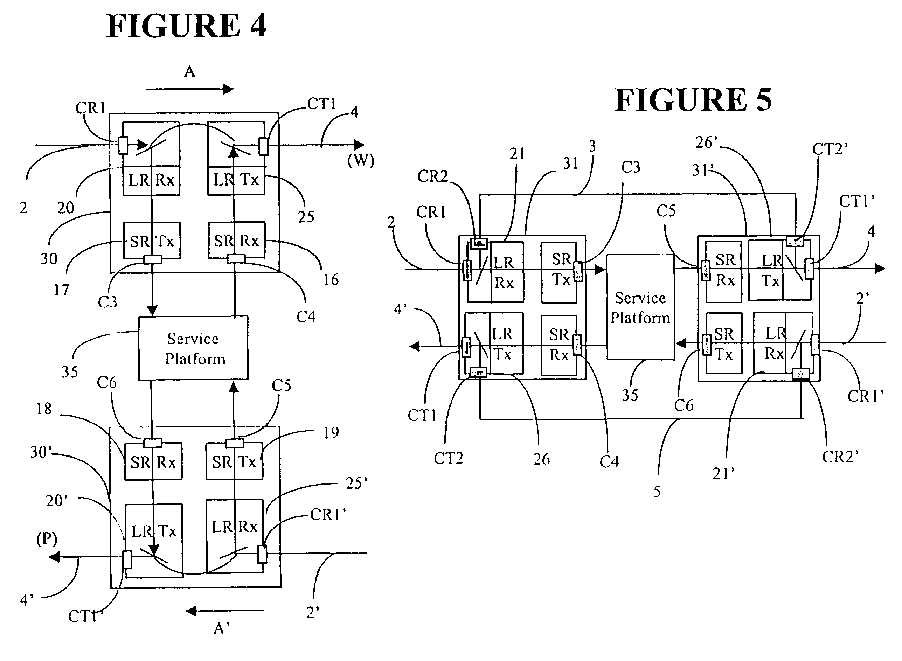

Figure 4 illustrates a traffic node with unidirectional transponders with ADM receivers and transmitters, designated in the following as an unidirectional ADM transponder. This configuration is compatible with unidirectional path switched rings (UPSR) and with 1+1 linear type protection. The UPSR is a two-fiber ring, where working traffic propagates in one direction along a first fiber and the protection traffic propagates in the opposite direction on the second fiber. Arrows A and A' show the direction of working and protection traffic.

A unidirectional ADM transponder, denoted with **30**, comprises a long reach ADM receiver (LR Rx) **20** and a long reach ADM transmitter (LR Tx) **25**, each with a respective integrated ADM filter, as shown in Figure 3A. The LR Rx **20** and LR Tx **25** of transponder **30** do not use connector **CR2** and **CT2**, rather there is a direct fiber connection for connecting the passthrough channels from housing **21** of the receiver optics to housing **22** of the transmitter optics.

ADM transponder **30** also comprises short reach receiver (SR Rx) **16** and short reach transmitter (SR Tx) **17** for communication with service platform **35**. ADM transponder **30** is connected in the path of the working traffic (W) to input fiber **2** using optical connector **CR1**, to output fiber **4** using optical connector **CT1**, and to the service platform **35** using connectors **C3** and **C4**.

Similarly, ADM transponder **30'** comprises LR Rx **20'** LR Tx **25'**, each with a respective integrated ADM filter, SR Rx **18** and SR Tx **19**. Transponder **30'** is connected in the path of the protection traffic (P) to input fiber **2'** using optical connector **CR1'**, to output fiber **4'** using optical connector **CT1'**, and to the service platform **35** using connectors **C5** and **C6**.

For the working traffic, drop direction, a channel λ_{drop} is separated form the input signal received on fiber **2** by the ADM filter of LR Rx **20**. LR Rx **20** decodes the client signal received over channel X_{drop}, processes it as needed and sends it in electrical format to SR Tx **17**. ST Tx **17** converts the client signal back to an optical format, modulates it over a channel λ_{d}, which is then sent to a local user over optical connector **C3**. As indicated above, the wavelength λ_{d} may be different from that of the dropped channel.

The passthrough or express channels λ₂ to λₙ are sent directly, in optical format, to the ADM filter of a LR Tx **25**. These channels may be directed to LR Tx **25** along a fiber connection internal to ADM transponder **30**, or input fiber **2** may be spliced so that X_{drop} is presented to LR Rx **20** and λ₂ to λₙ is presented to the LR Tx **25**.

For the working traffic, add direction, a local signal is received by ADM transponder **30** at connector **C4** over a channel λₐ, from service platform **35**. SR Rx **16** processes this signal as needed, and sends it to LR Tx **25** in electrical format. LR Tx **25** converts the signal to an optical format and modulates it over an add channel λ_{add}. ADM filter of the LR Tx **25** adds this channel to the express channels, and launches it over fiber **4**.

The advantages of this unidirectional transceiver configuration over the configuration of Figure 2 are primarily a lower cost for the transceiver. This is because the cost of the LR Rx **20**, **20'** and of LR Tx **25** and **25'** is reduced due to integration of the optics of the ADM with the optics of respective receiver/transmitter, and also because fewer connectors are needed to install the transceiver in the configuration of Figure 4 than in the configuration of Figure 2. Thus, the number of connectors needed in the configuration of Figure 4 is four connectors for each transponder, resulting in a total of eight connectors for both working and protection traffic. The number of connectors needed in configuration of Figure 2 is, as indicated above, 16.

Also, the configuration of Figure 4 results in lower through loss for each signal dropped/added at the respective node. For example, a working signal dropped at the OADM node passes through connectors **CR1** and **C3**, while a signal dropped in the current configuration shown in Figure 2 passes through four connectors.

A higher WDM system density may also be obtained as a result. This is because a transponder has approximately the same size regardless of the filter placement. If the ADM filters are separate units, they use up approximately the same cabinet space as a transponder. Thus, by integrating the filter on the transponder, the system density can be doubled, in that the space occupied by the separate filter elements could be taken by additional transponders.

The advantages of integration of the ADM filters with the receiver/transmitter optics are also evident in the configuration of Figure 5, which illustrates a bidirectional ADM transponder **31**. A bidirectional ADM transponder is similar in structure to the unidirectional ADM transponder in that it uses an ADM receiver/transmitter pair, a SR Rx /Tx pair, but unlike the unidirectional variant, it is provided with optical connectors **CR2** and **CT2**, respectively. Bidirectional ADM transponders may be used for example in two-fiber bidirectional line switched rings (2FxBLSR).

Figure 5 illustrates a node of a 2FxBLSR using a West bidirectional ADM transponder **31** connected to an adjacent West node by fibers **2** and **4'**, and an East bidirectional ADM transponder **31'** connected to an adjacent East node by fibers **4** and **2'**.

Each transponder has a LR Rx **21**, **21'**, a LR Tx **26**, **26'**, a respective short reach receiver and transmitter. The LR Tx **26**, **26'** and LR Rx **21** and **21'** of bidirectional ADM transceivers **30**, **31** use connectors **CR1** and **CT2** respectively, for connecting the passthrough channels from the East/West receiver to the West/East transmitter.

For the East direction, the ADM filter at the West LR Rx **21** receives the multichannel optical signal from fiber **2**, and diverts the passthrough channels to the ADM filter of the East LR Tx **25'** along fiber 3. The channel dropped at ADM filter of receiver **21** is passed to the short reach transmitter for insertion on the local network. The passthrough channels are combined with the add channel received from the service platform by ADM filter of transmitter **26'**, and launched over fiber **4**.

For the West direction, the reverse multichannel signal received at ADM transceiver **31'** on fiber **2'** is separated by ADM filter of LR Rx **21'** into a drop channel and passthrough channels. The passthrough channels are transmitted to the LR Tx **26** of ADM transceiver **31**, where they are multiplexed with the add channel.

The connectors are shown again as dark boxes arranged between the transceivers and the respective fibers. Configuration of Figure 5 uses six connectors for each transceiver, resulting in a total of 12 connectors. It can be seen that, again, fewer connectors are needed to install the transceiver in the network than in the case of current configuration shown in Figure 2.

This transceiver configuration can also perform multiplexing and demultiplexing operations. Mux/demux configurations may be obtained by cascading bidirectional ADM transponders.

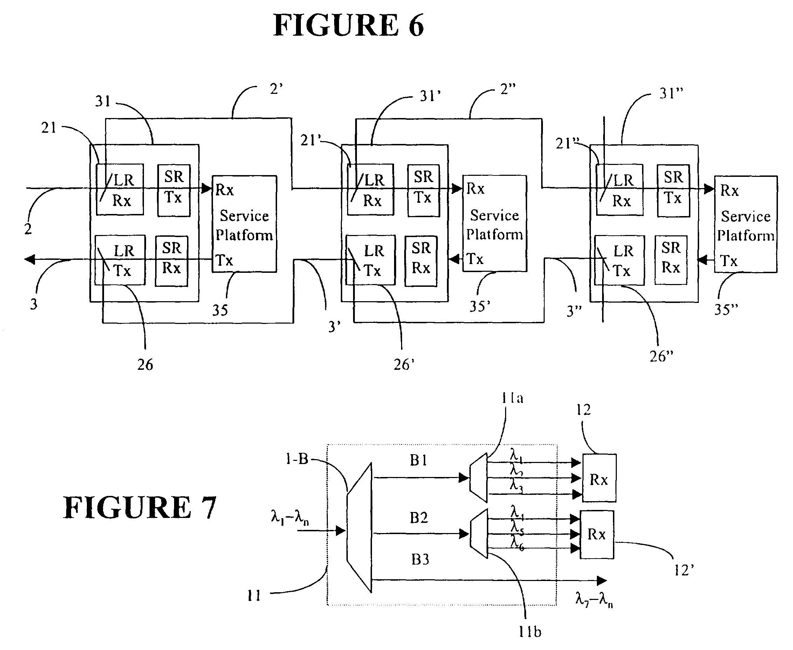

Figure 6 shows a 1:3 multiplexer/demultiplexer configuration comprising three bidirectional ADM transponders **31**, **31'**, and **31''**. Each bidirectional ADM transponder adds and drops a channel λ₁, λ₂, or λ₃, and the transponders may be arranged in any desired order. Each LR Rx **21**, **21'** and **21''**, and each LR Tx **26**, **26'**, and **26''** is provided with an integrated ADM filter. The ADM transponders are also provided, as in the previous examples, with a short reach receiver and transmitter and for connection with the respective service platform **35**, **35'** and **35''**.

The configuration operates as a demultiplexer for the East-bound traffic and as a multiplexer for the West-bound traffic. For the East direction of traffic, the ADM filter at LR Rx **21** receives the multichannel signal on fiber **2**, drops channel λ₁, and transmits channels λ₂ and λ₃ to LR Rx **21'**. The ADM filter at receiver **21'** drops channel λ₂, and transmits channel λ₃ to receiver **21''**.

For the West direction, the ADM filter of LR Tx **26''** of ADM transponder **31''** receives channel λ₃ from the short reach optics and transmits it to LR Tx **26'** of bidirectional transponder **31'**. A new channel λ₂ is added to λ₁ by the integrated ADM filter of LR Tx **26'**, and both channels are transmitted to ADM transponder **31**. The ADM filter of LR Tx **26** adds channel λ₁ and the multichannel signal comprising channels λ₁ to λ₃ is launched over fiber **3**.

An advantage of the configuration of Figure 6 is flexibility, due to the fact that channels can be added and dropped in any order. Another advantage is a lower initial system cost, since multiplexer/demultiplexer costs are only incurred when the transponder is deployed. A further advantage is an increased system density as the multiplexer/ demultiplexer filters do not need to be house separately.

The transponders according to this invention can also be cascaded into band OADMs, further increasing flexibility of ADM nodes configurations. The multiplex cascade can also be used with a second stage of band pass filters to form a Mux/Demux on band OADM function, as shown next.

Band OADM's are the subject matter of a co-pending patent application SN filed on , naming as inventors D. Danagher, A. Solheim and A. Somani, and assigned to Northern Telecom Limited, which is incorporated herein by reference. Figure 7 shows the principle of operation of these devices. A band OADM **11** uses a wide-band optical filter **1-B** to simultaneously separate input signal Sᵢₙ into two or more optical bands. In this example, filter **1-B** separates signal Sᵢₙ into bands B1, B2, and B3 each comprising a multichannel optical signal. The multichannel optical signal in band B1 includes three consecutive channels λ₁ - λ₃, while the multichannel optical signal in band B2 includes other three consecutive channels λ₄ - λ₆. The passthrough multichannel optical signal in band B3 includes the remaining consecutive channels λ₇-λₙ.

The multichannel signals in bands B1 and B2 are dropped at the site of the OADM **11**, while the signals in band B3 pass through this site. To this end, the wide-band filter **1-B** is followed by several narrow-band optical filters **11a**, **11b**, each for separating the wavelengths from the respective multichannel signal in bands B1 and B2. Thus, narrow-band filter **11a** separates the channels form band B1 to present each drop channel λ₁ - λ₃ to a respective receiver **12**. Similarly, narrow-band filter **11b** separates the channels form band B2 to present into drop channels λ₄ - λ₆ for a respective receiver **12'**. In fact each filter **11a**, **11b** comprises a concatenation of filter elements, each for a specific wavelength.

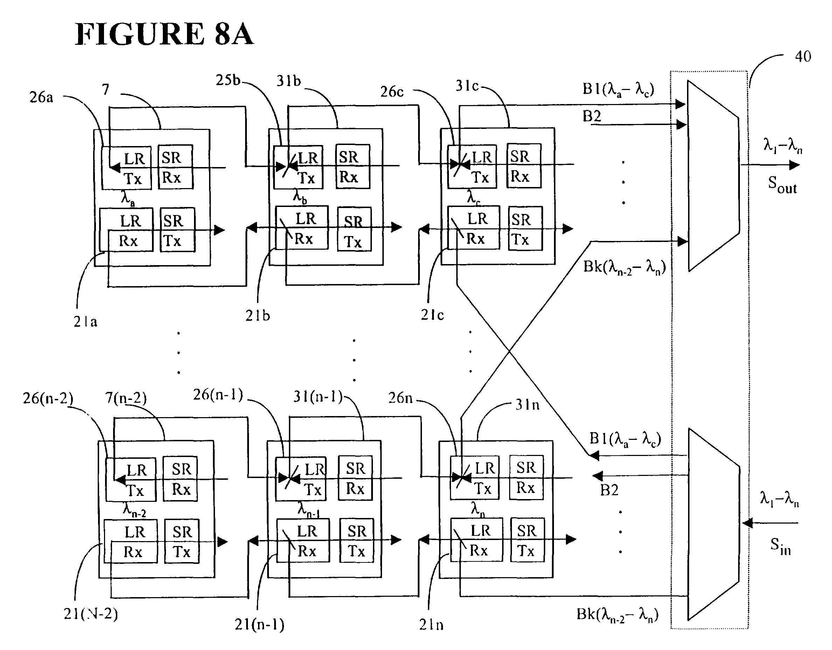

Figure 8A illustrates a Mux/Demux configuration comprising cascaded transponders and a band multiplexer/demultiplexer **40**. Band Mux/Demux **40** is of the type illustrated in Figure 7 and disclosed in the above-mentioned US Patent Application.

The demultiplexing section **40a** of band Mux/demux **40** separates an input multichannel signal Sᵢₙ, comprising channels λₐ - λₙ, into a plurality (k) of frequency bands B1-Bk, each band comprising a number of consecutive channels. The first band B1 comprises, for example, three consecutive wavelengths λₐ - λ_{c}, that are input to a 1:3 demultiplexer as shown in Figure 6. The 1:3 demultiplexer is comprised of three bidirectional ADM transponders **7**, **31b**, and **31c**. The ADM filter integrated at the LR Rx **21c** of transponder **31c** drops channel λ_{c} to the local service platform (not shown), and transmits channels λ_{b} and λₐ to stage b. In turn, ADM filter integrated at LR Rx **21b** of transponder **31b** drops λ_{b} to the local service platform and transmits λₐ to the first stage **7**. The transponder **7** converts the signal on this channel and presents it to the local service platform.

The multiplexing section **40b** of band Mux/Demux **40** receives (n) channels grouped in (k) frequency bands, and provides an output multichannel signal Sₒᵤₜ, comprising (n) wavelengths λₐ to - λₙ. For band B1, transmitter **26a** of transponder **7** transmits a client signal received from the local service platform (not shown) on channel λₐ, to transponder **31b**. The ADM filter integrated with LR Tx **26b** of transponder **31b** adds channel λₐ to channel λ_{b} received from the local service platform, and transmits these two channels to stage c. In turn, transponder **31c** adds channel λ_{c} and transmits λₐ to λ_{c} to the multiplexing section **40b** of band Mux/Demux **40**.

Similar add/drop operations are performed for all bands B2-Bk. Figure 7B also shows a cascade of transponders for the band Bk comprising channels λₙ₋₂ to λₙ. It is to be understood that the number of channels in each component bands B1-Bk may be different, three has been used in this specification as an example.

As in the previous embodiments, the wavelength of the multiplexed channels may or may not correspond to the wavelengths of the demultiplexed channels.

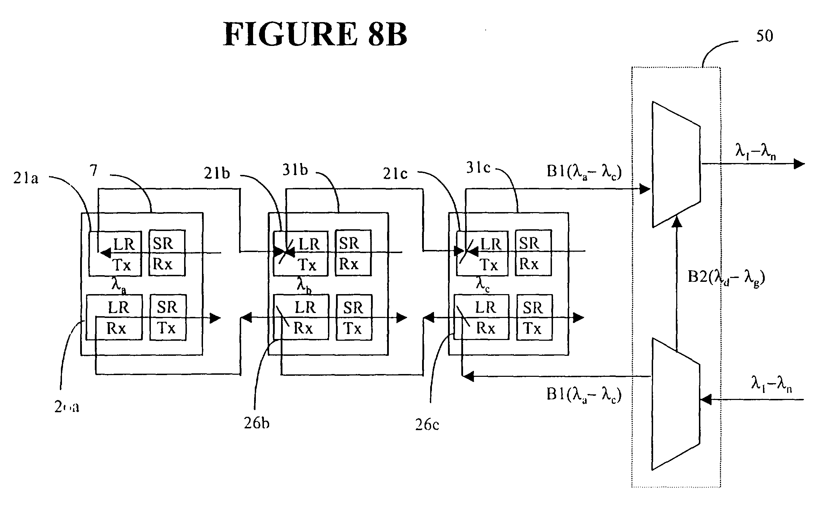

Figure 8B shows an add/drop configuration using cascaded transponders and a band OADM **50**. Band OADM **50** multiplexes/demultiplexes the multichannel signal into frequency band B1 and B2, where B2 comprises passthrough channels. The channels in the first band B1 are multiplexed/demultiplexed using a cascade of transponders **7**, **31b** and **31c**, to separate/combine channels λₐ to λ_{c}, as in the previous embodiment, and also as shown in Figure 6.

## Claims

1. An ADM optics package for an optical receiver of a wavelength division multiplexing (WDM) network comprising:
a receiver optics housing with a first input optical connector for transferring an input multichannel optical signal into said housing;
a first lens for collimating said input multichannel optical signal into a collimated multichanel optical signal;
a first ADM filter for receiving said collimated multichannel optical signal and separating same into a drop signal and a passthrough signal;
a light detector for receiving said drop signal and converting same to an electrical signal; and
means for guiding said passthrough signal to the outside of said receiver optics housing.

2. An ADM optics package as claimed in claim 1, wherein said first ADM filter is deposited on the surface of said light detector.

3. An ADM optics package as claimed in claim 1, wherein said means for guiding comprises first means for fixing a first end of a local fiber on said receiver optics housing, and a second lens for focusing said passthrough signal from said ADM filter on said first end of said local fiber.

4. An ADM optics package as claimed in claim 3, wherein said local fiber is spliced from said first input fiber.

5. An ADM optics package as claimed in claim 1, wherein said means for guiding comprises a first output optical connector and a second lens for focusing said passthrough signal on said first output connector.

6. An ADM optics package for an optical transmitter of a wavelength division multiplexing (WDM) network comprising:
a transmitter optics housing with a second output optical connector for transferring an output multichannel optical signal to said WDM network;
a light source for providing an add signal;
a second ADM filter element for combining said add signal with a passthrough signal and providing said output multichannel optical signal;
a third lens for focusing said output multichannel optical signal into said second output optical connector; and
means for guiding said passthrough signal to the inside of said transmitter optics housing.

7. An ADM optics package as claimed in claim 6, further comprising an additional lens for collimating said add signal.

8. An ADM optics package as claimed in claim 6, further comprising an isolator arranged between said additional lens and said second ADM filter for protecting said light source against reflections.

9. An ADM optics package as claimed in claim 6 wherein said means for guiding comprises second means for fixing a second end of a local fiber on said receiver optics housing, and a fourth lens for collimating said passthrough signal from said second end on said second ADM filter.

10. An ADM optics package as claimed in claim 9, wherein said local fiber is spliced from said second output fiber.

11. An ADM optics package as claimed in claim 6, wherein said means for guiding comprises a second input optical connector, and a fourth lens for focusing said passthrough signal on said second ADM filter.

12. A unidirectional ADM transceiver for an optical WDM network comprising:
an ADM optical receiver for separating an input multichannel optical signal received from the WDM network into a drop signal and a passthrough signal, according to the wavelength; and
an ADM optical transmitter for combining said passthrough signal and an add signal into an output multichannel optical signal according to the wavelength, and launching same into the WDM network.

13. A unidirectional ADM transponder for an optical WDM network comprising:
a unidirectional ADM transceiver as claimed in claim 12;
a transmitter for receiving said drop signal from said ADM optical receiver and transmitting same to a service platform; and
a receiver for receiving said add signal from a service platform and transmitting same to said integrated ADM-optical transmitter.

14. An ADM node for a WDM network comprising a first unidirectional ADM transponder as claimed in claim 13 for accommodating working traffic in a forward direction of transmission, and a second unidirectional ADM transponder as in claim 13 for accommodating protection traffic in a reverse direction of transmission.

15. A bidirectional ADM transceiver for an optical WDM network comprising:
an ADM optical receiver for separating a first input multichannel optical signal received from the WDM network in a first direction of transmission into a drop signal and a first passthrough signal, and transmitting said first passthrough signal along a first passthrough fiber; and
an ADM optical transmitter for combining a second passthrough signal received along a second passthrough fiber in a second direction of transmission, and an add signal into an second output multichannel optical signal and launching same into the WDM network over a second fiber in said second direction.

16. A bidirectional ADM transponder for a WDM network comprising
an ADM transceiver as claimed in claim 15;
a transmitter for receiving said drop signal from said ADM optical receiver and transmitting same to a service platform; and
a receiver for receiving said add signal from a service platform and transmitting same to said ADM optical transmitter.

17. An ADM node for an optical WDM network comprising:
a West bidirectional ADM transponder as claimed in claim 16, for interfacing with said WDM network to the West, wherein said first direction of transmission is West-to-East and said second direction of transmission is East-to-West; and
an East bidirectional ADM transponder as claimed in claim 16 for interfacing with said WDM network to the East, wherein said first direction of transmission is East to West and said second direction of transmission is form West-to-East.

18. A multiplexing node for a WDM network carrying a plurality N of channels, comprising a plurality N of bidirectional ADM transponders as claimed in claim 17, each transponder (n) being connected to an upstream transponder and to a downstream transponder for separating a drop channel form an input signal received from said upstream transponder and for passing to said downstream transponder said input signal without said drop channel.
